# EUROPEAN PATENT APPLICATION

(11) **EP 4 645 749 A1**
(43) Date of publication of application: **05.11.2025**
(21) Application number: 23913014.9
(22) Date of filing: 29.12.2023
(51) Int. Cl.: H04L 9/08, H04W 12/041, H04W 12/03, H04W 12/06, H04B 7/024, H04W 84/12, H04L 9/32

(54) **METHOD AND APPARATUS FOR TRANSMITTING OR RECEIVING SECURITY KEY-RELATED INFORMATION ON BASIS OF OPERATION OF MULTIPLE ACCESS POINTS IN WIRELESS LAN SYSTEM**

(30) Priority: 29.12.2022 KR 20220189481; 06.02.2023 KR 20230015774; 06.02.2023 KR 20230015806; 24.02.2023 KR 20230025379
(71) Applicant: LG Electronics Inc., Yeongdeungpo-gu Seoul 07336 (KR)
(72) Inventor: BAEK, Sunhee, Seoul 06772 (KR); CHUN, Jinyoung, Seoul 06772 (KR); CHOI, Jinsoo, Seoul 06772 (KR); JANG, Insun, Seoul 06772 (KR)
(74) Representative: Mooser, Sebastian Thomas
(86) International application number: PCT/KR2023/021967
(87) International publication number: WO 2024/144340

(57) **Abstract**

Disclosed are a method and apparatus for transmitting or receiving security key-related information on the basis of the operation of multiple access points (APs) in a wireless LAN system. The method performed by a first station (STA) in a wireless LAN system, according to one embodiment of the present disclosure, may include the steps of: generating a security key for a second STA on the basis of linkage with the second STA; and transmitting, to a third STA, a first message including information related to the security key for the second STA. The first message may include a security parameter element (SPE) including at least one of a basic service set identifier (BSSID) of the first STA or an address of the second STA.

## Description

### [TECHNICAL FIELD]

The present disclosure relates to a method and a device for transmitting or receiving security key-related information based on a multi-access point (AP) operation in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical problem of the present disclosure is to provide a method and a device for transmitting or receiving security key-related information based on a multi-AP operation in a WLAN system.

An additional technical problem of the present disclosure is to provide a method and a device for increasing the speed and efficiency of movement of a STA between multi-APs by allowing APs in a multi-AP set to obtain the same security key based on security key-related information transmitted or received within a multi-AP set in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a WLAN system according to an aspect of the present disclosure may include generating a security key for a second STA based on an association with the second STA; and transmitting, to a third STA, a first message including information related to a security key for the second STA. The first message may include a security parameter element (SPE) including at least one of a basic service set identifier (BSSID) of the first STA or an address of the second STA.

A method performed by a third station (STA) in a WLAN system according to an additional aspect of the present disclosure may include receiving, from the first STA, a first message including information related to a security key for the second STA generated based on an association between a first STA and a second STA; and generating a security key for the second STA based on information related to a security key for the second STA. The first message may include a security parameter element (SPE) including at least one of a basic service set identifier (BSSID) of the first STA or an address of the second STA.

### [Technical Effects]

According to the present disclosure, a method and a device for transmitting or receiving security key-related information based on a multi-AP operation in a WLAN system may be provided.

According to the present disclosure, a method and a device for increasing the speed and efficiency of movement of a STA between multi-APs by allowing APs in a multi-AP set to obtain the same security key based on security key-related information transmitted or received within a multi-AP set in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing various transmission or reception techniques in a MAP environment to which the present disclosure may be applied
FIG. 9 is a diagram for describing a 4-way handshaking procedure to which the present disclosure may be applied.
FIG. 10 is a diagram for describing a BSS transition in the existing WLAN system.
FIG. 11 is a diagram for describing the operation of the first STA according to the present disclosure.
FIG. 12 is a diagram for describing the operation of the second STA according to the present disclosure.
FIG. 13 is a diagram showing examples of a security key sharing scope according to the present disclosure.
FIG. 14 is a diagram showing examples of a format of a SPE according to the present disclosure.
FIG. 15 is a drawing describing an example of a method for delivering security key-related information through 4-way handshaking according to the present disclosure.
FIG. 16 is a drawing describing an example of a method for delivering security key-related information through 2-way handshaking according to the present disclosure.
FIG. 17 is a drawing describing an example of a method for delivering security key-related information through 1-way notification according to the present disclosure.

### [Best Model

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

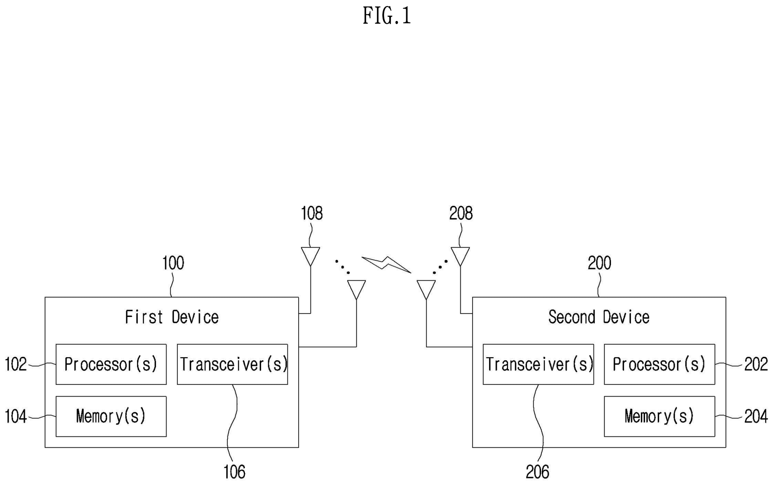

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

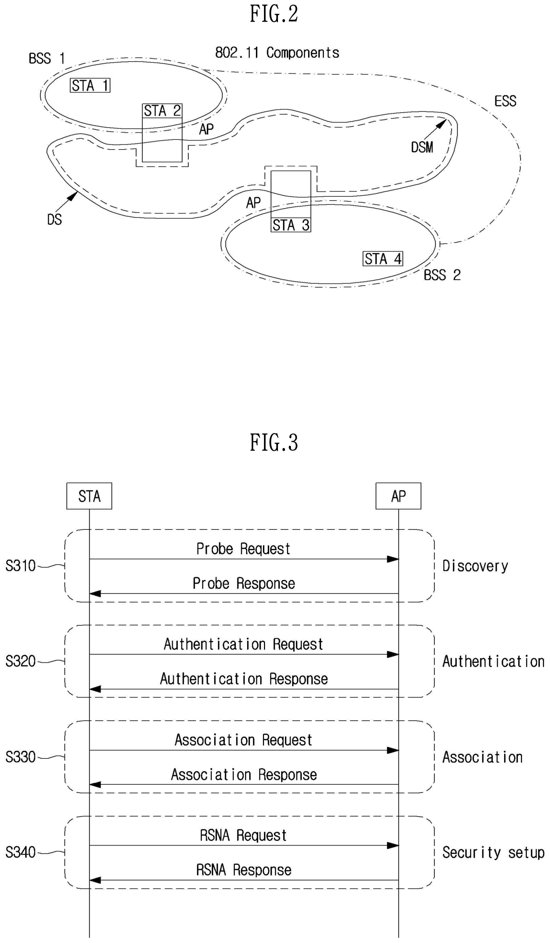

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

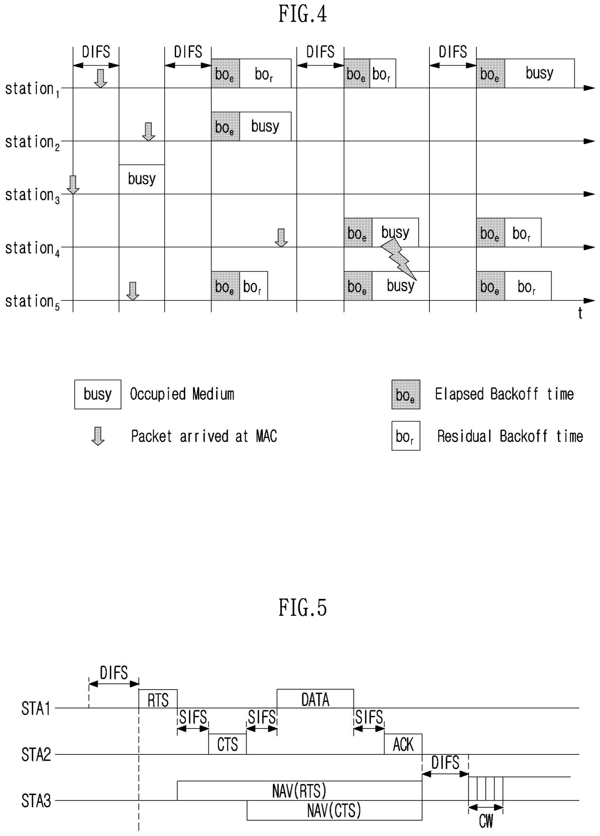

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

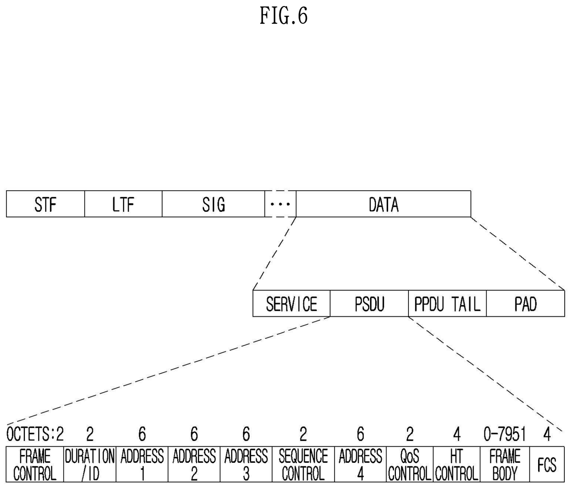

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

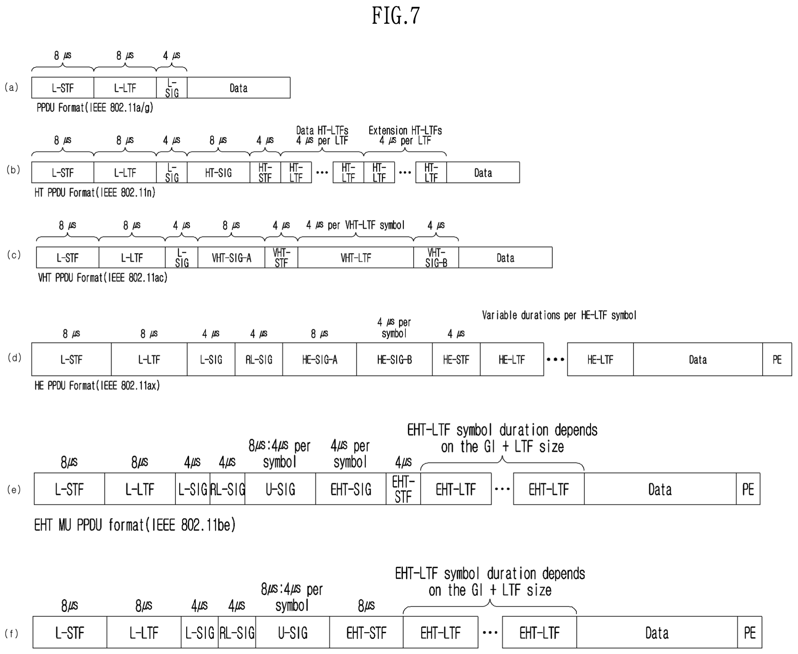

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11 a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multiple Access Point (MAP) Operation

Hereinafter, examples of the present disclosure for a multi-access point (MAP) operation will be described.

A MAP operation may be defined as an operation between a master AP (or a sharing AP) and a slave AP (or a shared AP).

A master AP plays a role of initiating and controlling a MAP operation for transmission or reception between multiple APs. A master AP groups a slave AP and manages a link with slave APs to share information between slave APs. A master AP manages information of a BSS configured with slave APs and information of STAs associated with a corresponding BSS.

A slave AP may be associated with a master AP and share control information, management information and data traffic with each other. A slave AP performs a basic function of an AP which may establish a BSS in a wireless LAN in the same way.

A STA in a MAP operation may be associated with a slave AP or a master AP to configure a BSS.

In a MAP environment, a master AP and a slave AP may perform direct transmission or reception with each other. A master AP and a STA may not be able to perform direct transmission or reception with each other. A slave AP (e.g., a slave AP associated with a STA) may perform direct transmission or reception with a STA. One of slave APs may become a master AP.

A MAP operation is a technique in which at least one AP transmits and receives information to at least one STA. For example, a C-TDMA (coordinated-time division multiple access) technique which divides allocation between APs on a time axis, a C-OFDMA (coordinated-orthogonal frequency division multiple access) technique which divides allocation between APs on a frequency axis, a C-SR (coordinated-spatial reuse) technique which uses spatial reuse and others may be applied for a MAP operation. Alternatively, a coordinated beamforming (C-BF) or joint beamforming technique which performs simultaneous transmission or reception in cooperation may be also applied for a MAP operation.

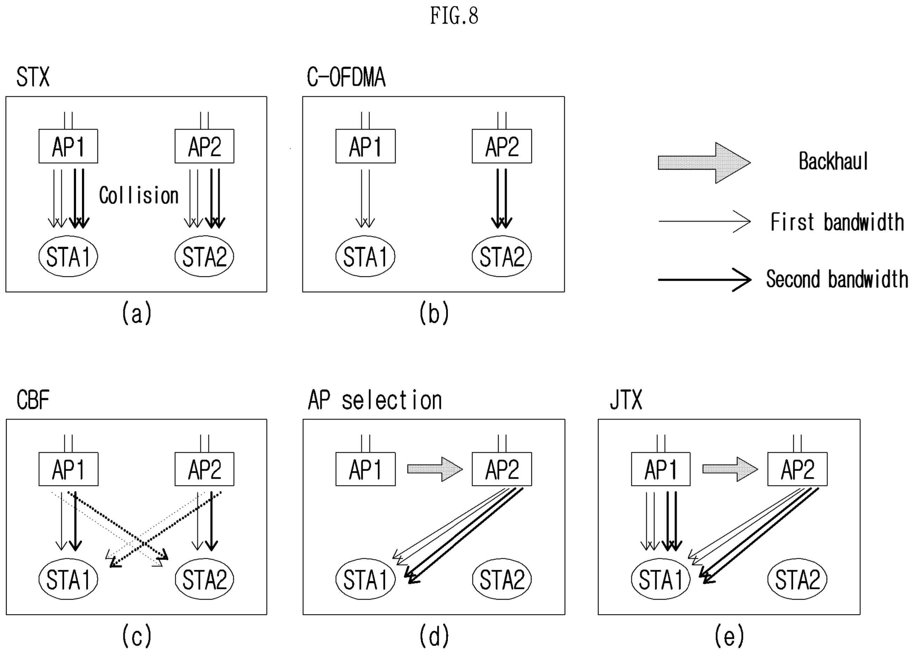

FIG. 8 is a diagram for describing various transmission or reception techniques in a MAP environment to which the present disclosure may be applied.

When a BSS AP performs transmission to a BSS STA like an existing method, it may be referred to as single transmission (STX). In STX, there is a problem that the performance of transmission or reception for users/STAs positioned at a cell edge is reduced due to interference with an adjacent AP. For example, as in FIG. 8(a), when AP1 and AP2 perform transmission to STA1 and STA2 at the same time in the same frequency bandwidth, a collision may occur on a wireless medium.

In a MAP technique, performance may be improved through a method for reducing inter-symbol interference (ISI) through cooperation between neighboring APs or performing transmission together. For example, in a C-OFDMA method of FIG. 8(b), AP1 may perform transmission to STA1 in a first bandwidth and AP2 may perform transmission to STA2 in a second bandwidth at the same time, avoiding interference. An example in FIG. 8(c) shows cooperative beamforming or nulling technique in which AP1 nulls interference to AP2 and/or STA2 while performing transmission to STA1 and AP2 nulls interference to AP1 and/or STA1 while performing transmission to STA2. FIG. 8(d) shows an AP selection method in which an AP with a good channel condition among the adjacent APs performs transmission. As in an example of FIG. 8(e), joint transmission (JTX) or joint reception (JRX) in which multiple APs cooperate to perform transmission or reception simultaneously may be applied, and further, joint MU-MIMO may be supported.

### RSN Operation

As described by referring to FIG. 3, an authentication process after a discovery process between a STA and an AP may be performed in an open system manner, and an association process may be performed. This process may be referred to as step 0 for searching for whether to support a robust security network (RSN) and establishing authentication and association.

When step 0 is successfully completed, step 1 for securing a pairwise master key (PMK) and user authentication by IEEE 802.1X/EAP (extensible authentication protocol) or a pre-shared key (PSK) may be performed. A mutual authentication method applied here may include 802.1X/EAP, PSK or SAE (simultaneous authentication of equals), etc. For example, for a 802.1X/EAP authentication method, a PMK may be generated from a master session key (MSK) after authentication between a STA and a remote authentication dial-in user service (RADIUS). For a user authentication method by a PSK, an AP and a STA may directly set a PMK in the same way as a PSK. For a user authentication by SAE, an AP and a STA may directly set a PMK by using the operation value of mutual authentication and authentication process through a SAE authentication process.

Following step 1, step 2 for confirming whether the other party has the same PMK by using an EAPoL-Key frame and generating and sharing an encryption key may be performed. Step 2 may include the process of mutually confirming PMK generation through 4-way handshaking and generating and delivering a group key (e.g., a group temporal key (GTK)). A pairwise transient key (PTK), a key confirmation key (KCK), a key encryption key (KEK), and a temporal key (TK) may be generated through 4-way handshaking.

Specifically, a PMK may be generated from a MSK in step 1, and a PTK may be generated from a PMK in step 2. Here, a PTK is set separately as a KCK, a KEK and a TK. A GTK may be generated from an AP and delivered to a STA. When an AP wants to generate a new GTK, it may perform handshaking with a STA and deliver a new GTK to a STA.

In order to confirm whether a STA and an AP have the same PMK, for 802.1X/EAP, the same MSK is set between a STA and an authentication server (AS) by a user authentication result between a STA and an AS, and an AS delivers a corresponding MSK to an AP. A STA and an AP may mutually confirm whether to have a PMK, a symmetric key generated from a MSK, through 4-way handshaking. For a PSK, an authentication procedure may be replaced by mutually verifying whether a PMK generated from a PSK set in advance between an AP and a STA is secured through 4-way handshaking. For SAE, a PMK set in advance between an AP and a STA may be mutually verified through 4-way handshaking.

It may also be confirmed whether a STA and an AP have the same PMK by mutually verifying that the same PTK was generated. For example, it may also be confirmed whether a PMK is secured through message 2 and message 3 of 4-way handshaking. Specifically, in message 2, a STA may transmit the KCK of a PTK it generated to an AP by including it in a key MIC field. In message 3, an AP may transmit the KCK of a PTK it generated to a STA by including it in a key MIC field. Through this, a STA (an AP) may verify that an AP (a STA) generated the same PTK as its PTK and confirm that an AP (a STA) has the same PMK as its PMK. Meanwhile, in message 1, the value of a key MIC field may be set as 0, and in message 4, a KCK value may be included in a key MIC field.

In this way, a security key for encrypting data to be transmitted and received between a STA and an AP may be generated in step 2. In a RSN, a different security key is generated for each STA associated with an AP, and another security key is generated when a STA is re-associated with another AP.

Based on a TK generated as a result of 4-way handshaking in step 2, data encryption may be performed by using a temporal key integrity protocol (TKIP), a cipher-block chaining message authentication code protocol (CCMP), a Galois/Counter Mode protocol (GCMP), etc., which may be referred to as step 3.

The above-described MSK, PSK, PMK, PTK, KCK, KEK and TK correspond to a pairwise key, i.e., a pairing key between an AP and a STA. Unlike a pairwise key, a group key may be generated based on a group master key (GMK) so that an AP generates a security key for a group-addressed frame, such as a beacon frame. A GMK is randomly set by an AP. A group temporal key (GTK) is generated from a GMK by a pseudorandom function (PRF) function, and corresponds to a unidirectional group key from an AP to a STA.

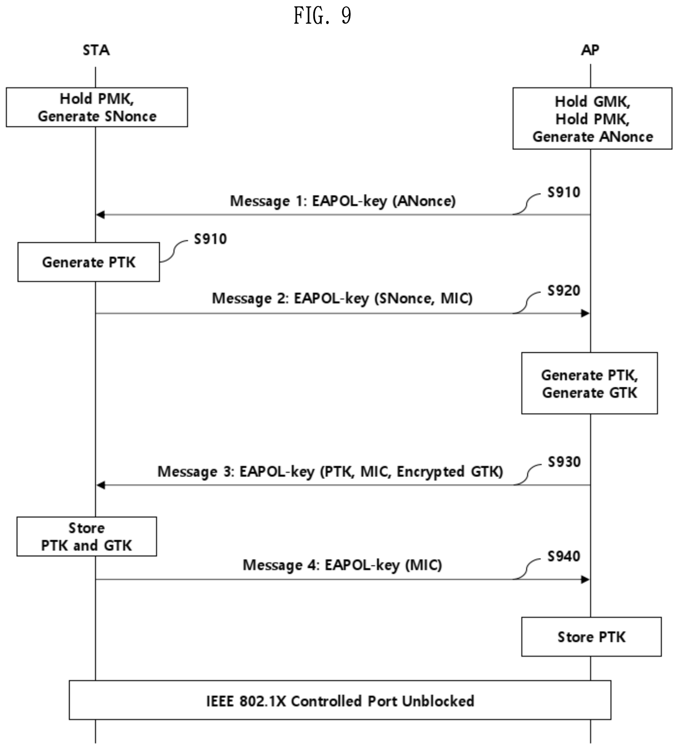

FIG. 9 is a diagram for describing a 4-way handshaking procedure to which the present disclosure may be applied.

A STA corresponds to a supplicant, and an AP corresponds to an authenticator. 4-way handshaking may be performed to generate and confirm a PTK and a GTK between an AP and a STA when a STA has or knows a PMK and an AP has or knows a PMK and a GMK.

ANonce and SNonce correspond to a factor used in a PRF function used to generate a PTK. ANonce may correspond to a random number generated by an access point (i.e., an authenticator). SNonce may correspond to a random number generated by a STA (i.e., a supplicant). A PRF function may correspond to a function that generates a PTK based on, for example, a PMK, ANonce, SNonce, the MAC address of a supplicant and the MAC address of an authenticator.

Message 1 in S910 is transmitted from an AP to a STA in a unicast manner, and an EAPOL-key frame may include ANonce information. When an AP generates a PMK, PMKID may be included in the key data field of an EAPOL-key frame. A STA may generate a PTK based on information received from an AP and may generate a KCK, a KEK and a TK based on a PKT.

Message 2 in S920 is transmitted from a STA to an AP in a unicast manner, and an EAPOL-key frame may include SNonce information and a key message integrity code (MIC). For example, the key MIC of message 2 may have a value based on a KCK generated by a STA. An AP may generate a PTK based on information received from a STA and may generate a KCK, a KEK and a TK based on a PTK. An AP may verify whether an AP and a STA generated the same PTK based on whether the KCK value of a PTK generated based on a value included in message 2 and a KCK value related to a key MIC value included in message 2 are the same. In addition, an AP may generate a GTK, if necessary. A GTK may be generated by an AP from a GMK without the participation of a STA.

Message 3 in S930 is transmitted from an AP to a STA in a unicast manner, and an EAPOL-key frame may include a PTK, a MIC and encrypted GTK information. The encrypted GTK of message 3 may be generated based on a KEK generated by an AP and may be included in a key data field. A STA may store a PTK in PKT-SA (PKT-Security Association) and a GTK in GTK-SA.

Message 4 in S940 is transmitted from a STA to an AP in a unicast manner, and an EAPOL-key frame may include MIC information. When verification is completed through MIC, an AP may store a PTK in PKT-SA and a GTK in GTK-SA.

When 4-way handshaking is successfully completed in this way, a virtual control port that blocks all traffic may be unblocked and encrypted traffic may be transmitted and received. Afterwards, all unicast traffic may be encrypted by a PTK, and all multicast/broadcast traffic may be encrypted by a GTK.

### A fast BSS transition (FT) operation

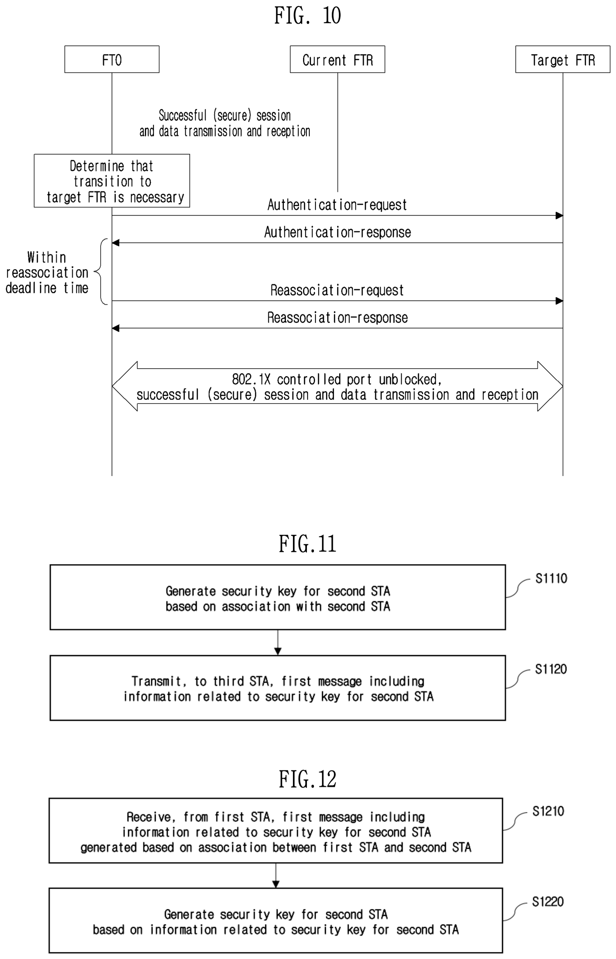

FIG. 10 is a diagram for describing a BSS transition in the existing WLAN system.

For a fast BSS transition (FT) method corresponding to the typical example of a BSS transition (or roaming), various processes such as an authentication request/response, a re-association request/response, etc. are required between a FT originator (FTO) (or a non-AP STA) and a target FTR in order to move from a current FT responder (FTR) (or a current AP) to a target FTR (or a target AP). In other words, in the existing BSS transition method, a re-association process is required on the same mobility domain.

In addition, after a process illustrated in FIG. 10, various operation parameters such as an agreement related to BlockAck (BA) or Service Classification Service (SCS), etc., a SN, an EDCA function (EDCAF) parameter, etc. are reset. Accordingly, a FTO must perform a variety of and a large number of frame exchanges for FT and must perform an agreement/a configuration with a new FTR again. Accordingly, the complexity and overhead of a FT process are high and data loss may occur during a FT process.

In the existing authentication method, a STA that determines that roaming to a new AP is necessary must exchange a (re-)association request/response with a new AP, and may obtain a MSK after successfully completing a STA's authentication for a new AP. In other words, a STA must newly start RSN authentication and key generation processes described by referring to FIG. 9 from the beginning with a new AP.

In a FT method to refine this, obtaining a MSK during an authentication process may be completed before a STA performs roaming. For example, when a STA enters a mobility domain (MD), an initial authentication procedure is performed only once, and an encryption method derived from an initial authentication procedure is used within the same MD (i.e., entities having the same MD identification information (MDID)), so roaming time may be shortened and the load of an authentication server (AS) may be reduced.

In addition, a FT key hierarchy may be supported to support a FT method. The highest level of key holder (KH) may correspond to R1KH and S1KH, and a low level of key holder may correspond to R0KH and S0KH. R1KH and S1KH may have the access right to R0KH and S0KH. R0KH and R1KH belong to the station management entity (SME) RSNA key management of an AP, and may be referred to as an authenticator key holder. S0KH and S1KH belong to the SME RSNA key management of a STA, and may be referred to as a supplicant key holder. R0KH and S0KH may be responsible for calculating PMK-RO and PMK-R1 of an AP and a STA, respectively. R1KH and S1KH may be responsible for calculating PTK of an AP and a STA, respectively.

When authentication is successfully performed in a FT initial mobility domain association method, R0KH of an AP (e.g., a current FTR) may receive a PMK and related parameters. Here, when a KH belonging to the same MDID as a STA to be associated already exists, PMK-RO security association (SA) and PMK-R1 SA where R0KH exists may be deleted, and PMK-RO and PMK-R1 may be calculated based on a newly received PMK. Afterwards, S1KH of a STA and R1KH of an AP may generate a TK and a GTK through 4-way handshaking and store and manage them in each SA (e.g., PTKSA, GTKSA). Accordingly, an IEEE 802.1X controlled port between a STA and an AP may be unblocked and an encrypted message may be transmitted and received.

### Multi-AP Operation-Based Security Key-related Information Sharing

As described above, after an association between an AP and a STA is established, an encryption key (e.g., a TK derived from a PTK) used in data encapsulation/de-encapsulation is generated through 4-way handshaking. The security parameters in this process may be stored in a PTK security association (SA) within an AP and a STA. The corresponding information may be reused when a STA moves/roams from an associated AP to another AP and an encryption key (e.g., a TK) may be regenerated. This process may be applied, for example, in a FT method.

A multi-AP (MAP) may be configured by including one master AP (or sharing AP) and at least one slave AP (or shared AP). In a MAP environment, it may be assumed that a STA performs FT to establish re-association with another AP in a MAP after performing 4-way handshaking for initial association with an AP belonging to a MAP (or a MAP set) through a current existing authentication method. In this case, a STA must generate a different encryption key for each AP connected to communicate with different APs. In these processes, a STA performs multiple communications with APs in one MAP set, which may cause delay and hinder efficient transmission and reception of data in a MAP.

The present disclosure describes various examples in which a seamless security association is established between APs belonging to a MAP and a STA.

In the present disclosure, in a MAP environment, a STA may generate a security key for data transmission and reception through an initial association with a master AP or a slave AP. One AP within a MAP that establishes an initial association with a STA may transmit information related to a corresponding security key (e.g., a parameter required to generate a corresponding security key in the same way, etc.) to AP(s) within the same MAP. AP(s) that received security key-related information may generate the same security key, causing APs within a MAP to obtain the same security key. Accordingly, delay and inefficiency according to the movement/roaming of a STA as described above may be reduced. For example, although a STA moves between APs within one MAP, it may continuously transmit and receive data with a new AP without additional authentication and re-association procedures.

Hereinafter, specific examples of a method for transmitting and receiving security key-related information based on a multi-AP operation are described. The names and values of a field, an element, a parameter, a key, etc. proposed in the present disclosure are exemplary and are not limited to those names and values. In addition, unless otherwise specified, a STA may be an AP STA or a non-AP STA.

FIG. 11 is a diagram for describing the operation of the first STA according to the present disclosure.

In the example of FIGS. 11 and 12, the first STA may correspond to an AP (e.g., a master/sharing AP, or a slave/shared AP) within a MAP that establishes an initial association with the second STA, the second STA may correspond to a non-AP STA that establishes an initial association with the first STA and the third STA may correspond to another AP (e.g., a master/sharing AP, or a slave/shared AP) within a MAP.

In S1110, the first STA may generate a security key for the second STA based on an association with the second STA.

S1110 may include generating a security key (e.g., a PTK) through a 4-way handshaking procedure according to an initial association between the first STA and the second STA.

In S1120, the first STA may transmit the first message including information related to a security key for the second STA to the third STA.

In S1120, the first STA may transmit information related to a corresponding security key (or a security parameter), not a security key itself for the second STA, to the third STA.

As an example (e.g., 4-way handshaking between the first STA and the third STA), message 1 may include at least one of the BSSID of the first STA or the MAC address of the second STA. This information may be included in the security parameter element (SPE) of message 1. Message 1 may include one pairwise cipher suite and one authentication key method (AKM) negotiated between the first STA and the second STA. This information may be included in the RSNE of the first message. The value of at least one RSN capability included in the RSNE of the first message may be set to be the same as the value of at least one RSN capability received from the second STA (through a 4-way handshaking procedure according to an initial association between the first STA and the second STA). The SPE of the first message may include a security parameter MIC and/or a security key MIC calculated by the first STA.

After transmitting the first message, the second message may be received from the third STA. The second message may include a SPE including a status code indicating whether to use each of one pairwise cipher suite and one AKM included in the first message. The SPE of the second message may include a security parameter MIC and/or a security key MIC calculated by the third STA.

After receiving the second message, the third message may be transmitted to the third STA. The third message may include one group data cipher suite and one group management cipher suite negotiated between the first STA and the second STA. The SPE of the third message may include a security parameter MIC calculated by the first STA.

After transmitting the third message, the fourth message may be received from the third STA. The fourth message may include a SPE including a status code indicating whether to use each of one group data cipher suite and one group management cipher suite included in the third message. The SPE of the fourth message may include a security parameter MIC calculated by the third STA.

As another example (e.g., 2-way handshaking between the first STA and the third STA), the first message may include one pairwise cipher suite, one AKM, one group data cipher suite and one group management cipher suite negotiated between the first STA and the second STA. The value of at least one RSN capability included in the first message may be set to be the same as the value of at least one RSN capability received from the second STA. The SPE of the first message may include a security parameter MIC and/or a security key MIC calculated by the first STA.

After transmitting the first message, the second message may be received from the third STA. The second message may include a SPE including a status code indicating whether to use each of one pairwise cipher suite, one AKM, one group data cipher suite and one group management cipher suite included in the first message. The SPE of the second message may include a security parameter MIC and/or a security key MIC calculated by the third STA.

After the first STA described above transmits the first message and/or the third message that delivers security key-related information (or a security parameter) to the third STA, the second message and/or the fourth message may include a security parameter status code representing a verification result based on a security parameter MIC and/or a security key status code representing a verification result based on the security key MIC.

Alternatively (e.g., 1-way notification from the first STA to the third STA), after transmitting the first message, the first STA may not expect a response message from the third STA. In addition, the first message may be notified to at least one STA (within a MAP) including the third STA in a group address manner.

A method described in the example of FIG. 11 may be performed by a first device 100 in FIG. 1. For example, at least one processor 102 of the first device 100 in FIG. 1 may be configured to generate a security key for the second STA based on an association with the second STA and transmit to the third STA the first message including information related to a security key for the second STA. According to some embodiments, a processor 102 may be configured to receive the second message from the third STA. According to some embodiments, a processor 102 may be configured to receive the second message from the third STA, transmit the third message to the third STA and receive the fourth message from the third STA. Furthermore, at least one memory 104 of a first device 100 may store instructions for performing a method described in the example of FIG. 11 or examples described below when executed by at least one processor 102.

FIG. 12 is a diagram for describing the operation of the third STA according to the present disclosure.

In S1220, the third STA may receive information related to a security key for the second STA from the first STA. A security key for the second STA may be generated based on an association between the first STA and the second STA, and the third STA may receive from the first STA information (or a security parameter) related to a corresponding security key, not a security key itself for the second STA.

Specific details of the first message received by the third STA or the second message/the third message/the fourth message exchanged between the third STA and the first STA are the same as in the example of FIG. 11, so an overlapping description is omitted.

In S1220, the third STA may generate a security key for the second STA based on information related to a security key for the second STA.

Accordingly, the third STA may perform data transmission and reception with the second STA without performing a procedure such as a direct association with the second STA, etc.

A method described in the example of FIG. 12 may be performed by a second device 200 in FIG. 1. For example, at least one processor 202 of the second device 200 in FIG. 1 may be configured to receive from the first STA the first message including information related to a security key for the second STA generated based on an association between the first STA and the second STA and generate a security key for the second STA based on information related to a security key for the second STA. According to some embodiments, a processor 202 may be configured to transmit the second message to the first STA. According to some embodiments, a processor 202 may be configured to transmit the second message to the first STA, receive the third message from the first STA and transmit the fourth message to the first STA. Furthermore, at least one memory 204 of a second device 200 may store instructions for performing a method described in the example of FIG. 12 or examples described below when executed by at least one processor 202.

The examples of FIGS. 11 and 12 may correspond to some of the various examples of the present disclosure. Hereinafter, various examples of the present disclosure including the example of FIGS. 11 and 12 will be described in more detail.

In embodiments described below, transmitting and receiving security key-related information within a MAP is described as a representative example, but embodiments described below may also be applied equally to a set of STAs in a different scope that requires transmission and reception of security key-related information without being limited to a MAP. In addition, in embodiments described below, a security key name such as PTK, TK, GTK, etc. is described as a representative example, but embodiments described below may also be applied equally to a security key under other names used for a corresponding function/role.

### Embodiment 1

This embodiment relates to the definition, identification and initial authentication of a scope in which security key-related information may be transmitted and received (e.g., a set of APs belonging to one MAP and capable of a STA's roaming).

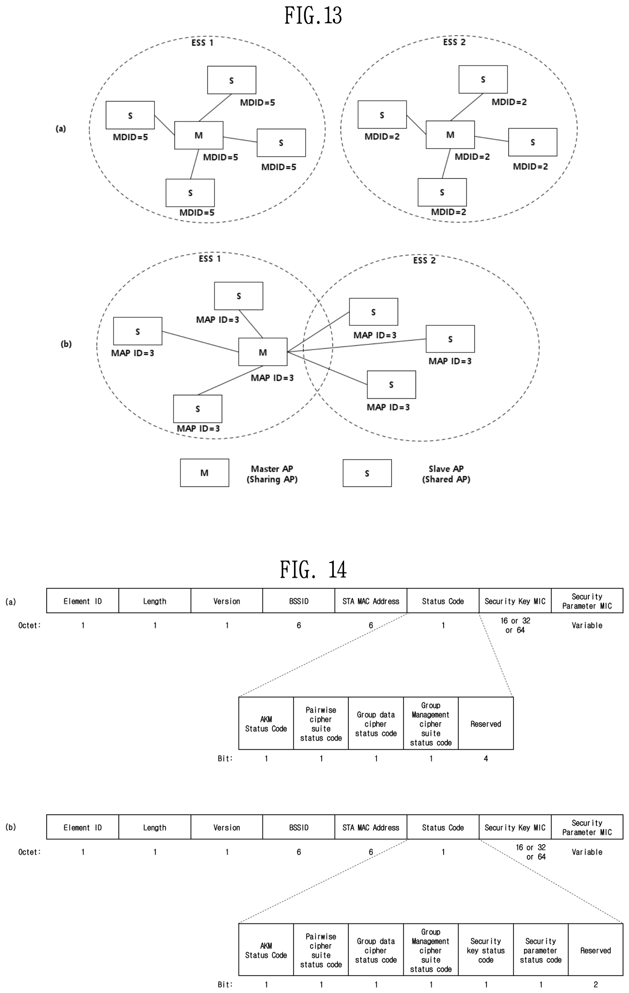

FIG. 13 is a diagram showing examples of a scope in which security key-related information is transmitted and received according to the present disclosure. In FIG. 13, M represents a master AP, and S represents a slave AP.

A scope to which a FT protocol described by referring to FIG. 10 is applied corresponds to STAs and APs belonging to the same mobility domain (MD) within the same ESS, and this scope may be identified by MDID.

As in the example of FIG. 13(a), a scope in which security key-related information transmission and reception within a MAP according to the present disclosure (which is distinct from a FT operation) is applied may also be identified by setting the same MDID for APs that may transmit and receive the security key-related information of the present disclosure (e.g., a master AP and slave AP(s) within one MAP). A MDID set for this purpose means the same MD in the same ESS, and further, it may be applied to a MAP to represent that the same MD corresponds to one MAP.

As in the example of FIG. 13(b), when APs (e.g., a master AP and slave AP(s) in one MAP) that may transmit and receive the security key-related information of the present disclosure belong to a plurality of ESSs, corresponding APs may not be identified with a MDID limited to one ESS. Accordingly, a new ID (e.g., a MAP ID) distinct from a MDID may be defined, and a scope in which the security key-related information of the present disclosure may be transmitted and received may be identified by using this.

For the example of FIG. 13(a), a scope in which the security key-related information of the present disclosure may be transmitted and received may also be identified by using a MAP ID distinct from a MDID.

### Embodiment 2

This embodiment relates to initial authentication, security key generation after an initial association and security key-related information transmission and reception methods between a STA and one of the APs belonging to a scope in which security key-related information may be transmitted and received (e.g., one MAP).

An initial authentication procedure performed before an initial association process between an AP belonging to a MAP and a STA may be performed similarly to that described by referring to a FT protocol in FIG. 10 and a process in FIG. 3. For example, when an authentication process after a discovery procedure is performed in an open system manner and an association process is successfully completed, authentication may be performed based on an IEEE 802.1X method. When this authentication is successfully completed, a STA and an AP may obtain a PMK from an IEEE 802.1X authentication server.

In the present disclosure, all other APs (i.e., master AP and/or slave AP(s)) belonging to the same MAP as an AP (e.g., a master AP or a slave AP) that performs an authentication procedure with a STA may also receive/obtain the same PMK from an IEEE 802.1X authentication server. Unlike examples described by referring to FIGS. 3 and 10, it means that a PMK is shared based on a MAP, and for this purpose, a security key sharing scope through the above-described MAP ID (or MDID) may be identified.

Next, in a MAP, a STA and an AP (e.g., a master AP or a slave AP) may generate a security key (e.g., a PTK) through an initial association process and a 4-way handshaking process and store or install the same (or pairwise) security key (PTK) in each of a STA and an AP. For example, an initial association process may be performed similarly to a FT initial (MD) association process, and a 4-way handshaking process may be performed similarly to a FT 4-way handshaking process.

In the present disclosure, an AP that generates and stores the same/pairwise security key (e.g., a PTK) as a STA may transmit information related to the same/pairwise security key (e.g., a PTK) or another security key (e.g., a TK) derived from a corresponding security key to all other APs belonging to the same MAP (i.e., a master AP and/or slave AP(s)). As a method for transmitting security key-related information, a method may be applied in which an AP that generates/stores the same/pairwise security key as a corresponding STA includes corresponding security key-related information (e.g., parameters used to generate a PTK/a TK) in data/a frame and transmits it to other AP(s) in a unicast or groupcast manner (i.e., through a wireless medium).

For example, corresponding security key-related information may be included in a frame transmitted from one AP to another AP within a MAP, and a corresponding frame may include a new security parameter element (SPE).

### Embodiment 3

This embodiment relates to a method in which APs in a MAP transmit and receive security key-related information.

As described above, when a STA establishes an initial association with an AP (a master AP or a slave AP) within a MAP, a STA and a corresponding AP may generate a security key (e.g., a PTK or a TK) in the same way. Information related to a corresponding security key (a PTK/a TK) may be delivered to other APs within a MAP (a master AP and/or slave Ap(s)) in a unicast or groupcast manner. In other words, a security key (a PTK/a TK) itself is not shared in a MAP, but security key-related information may be shared from an AP (i.e., an AP that establishes an initial association with a STA) to another AP in a MAP.

For example, a security key (e.g., a PTK/a TK) may be generated through a FT initial association (or FT initial mobility domain association) process and a FT 4-way handshake process between an AP and a STA in a MAP. An AP that generates the same security key as a STA, i.e., an AP within a MAP that establishes an initial association with a STA, may be referred to as AP1. AP1 may transmit, to the remaining APs within the same MAP, parameters used to generate a security key (i.e., a PTK/a TK) in a 4-way handshake process after an initial association with a STA by including them in data.

A method for delivering the security key-related information of an associated STA between APs in the present disclosure may be applied in a method in which a message exchange method between a STA and an AP in a 4-way handshake process defined in the existing WLAN system is used to perform delivery between APs without defining a new procedure for delivering security key-related information. In addition, since a security key itself is not directly included, but security key-related information is included in a message exchanged between APs, a security risk due to message exposure may be reduced. Applying a 4-way handshake procedure between APs as it is to deliver the security key-related information of a STA associated with an AP within a MAP to other APs is complicated and may significantly increase the packet volume. Accordingly, the present disclosure describes a new method for reducing the message size of a 4-way handshake method or simplifying a message exchange procedure by a 2-way or 1-way notification method.

AP1 that establishes an initiation association with a STA within a MAP may transmit negotiated security parameters to AP2, AP3, AP4, ... within the same MAP in order to form the security key of associated STA(s). Accordingly, APs within a MAP may generate a security key based on a received security parameter, so the security key of a STA associated with AP1 may be commonly generated among APs within a MAP.

Here, security parameters may include security parameters for forming a security key (a PTK/a TK), and may also include security parameters negotiated for message encryption/decryption between STA(s) associated with AP1.

First, features commonly applied to the following specific examples are described.

AP1 corresponds to an AP that establishes an initiation association with a STA within a MAP, and another AP within the same MAP is referred to as AP2. AP1 and AP2 may correspond to a master (or sharing) AP and a slave (or shared AP) or may correspond to a slave AP and a master AP or may correspond to a slave AP and a slave AP.

APs within a MAP may support FT, and may include a key holder as a RSNA management entity within each AP. According to the examples of the present disclosure, when an AP that received the security key-related information of a STA from another AP already has the security key-related information of a corresponding STA, the existing information may be deleted and a security key may be regenerated based on newly received information.

A message format exchanged between AP1 and AP2 may be based on an EAPOL-Key frame as in a 4-way handshake procedure, or may be based on the format of another management frame or action frame. Regardless of a message format that AP1 and AP2 have, a corresponding message may include a security parameter element (SPE), a new element defined in the present disclosure.

In message exchange between AP1 and AP2, a GTK and/or GTK-related information provided from AP1 to a STA associated with AP1 may be delivered to AP2. In other words, a corresponding GTK and/or GTK-related information may or may not be included in a message exchanged in 4-way handshake, 2-way handshake and 1-way notification methods described below.

FIG. 14 is a diagram showing examples of a format of a SPE according to the present disclosure.

A SPE may be included in a management frame/an action frame used for message exchange between APs in the present disclosure. This management/action frame may include a SPE in the following format.

**[Table 1]**

| Order | Information |
|---|---|
| 1 | Category |
| 2 | xxx action or protected xxx action |
| 3 | Dialog token |
| 4 | RSNE |
| 5 | RSNXE (optional) |
| 6 | FTE |
| 7 | SPE |

In Table 1, a category field may be set as a code value representing that a corresponding management/action frame relates to, for example, the delivery of security key-related information between APs. Next, a (protected) xxx action field represents a type to which a corresponding frame belongs, and xxx may be set as a value that distinguishes a WLAN system such as EHT, UHR, etc. A dialog token field may be set as a non-zero value selected by a STA transmitting a request, and may identify a request/a report or a request/a response. A RSNE (RSN element) field corresponds to an element including information required to establish a RSNA. A RSN extension element (RSNXE) may include additional information required to establish a RSNA. A FT element (FTE) may include information required to perform a FT authentication sequence during a FT within a RSN. A SPE may include security key-related information according to the present disclosure. As in the example of FIG. 14, an element ID is set as a value representing that a corresponding element is a SPE, and a length field represents the length of fields following a length field. A version field may be set as a value representing the version number of a RSN protocol (e.g., 1). A BSSID field may be set as a value corresponding to the BSSID or MAC address of AP1 (i.e., an AP that establishes an initial association with a STA within a MAP). A STA MAC address may be set as a value corresponding to the MAC address of a STA that establishes an initial association with AP1. A security key MIC may correspond to a value (e.g., a KCK, or another value derived from a PTK) that may confirm whether the same security key is generated between APs based on security key-related information transmitted between APs. A security parameter MIC may correspond to a value for verifying the validity of security key-related information transmitted between APs.

In FIG. 14(a), a status code field may include authentication key method (AKM) status code, pairwise cipher suite status code, group data cipher status code and group management cipher suite status code subfields. Each status code subfield may represent whether to use a corresponding AKM, pairwise cipher suite, group data cipher suite and group management cipher suite. The remaining bits may be defined as a reserved bit.

In the example of FIG. 14(b), compared to the example of FIG. 14(a), a status code field may further include security key status code and security parameter status code subfields. A security key status code subfield may be set as a value representing whether the MIC value of a security key generated from received security key-related information and a received security key MIC value are the same by comparing them. A security parameter status code subfield may be set as a value representing whether a security parameter MIC value generated from received security parameter information and a received security parameter MIC value are the same by comparing them.

In examples described below, when the value of each field within an element and an element included in Table 1 and FIG. 14 is not specified, it may mean that the value of a corresponding element/field is 0 or a null value or may mean that whether a corresponding element/field is included is optional and accordingly, it is not included in a corresponding frame/message.

### Embodiment 3-1

This embodiment relates to a method for delivering security key-related information for generating the same security key between AP1 and AP2 through 4-way handshaking between AP1 and AP2.

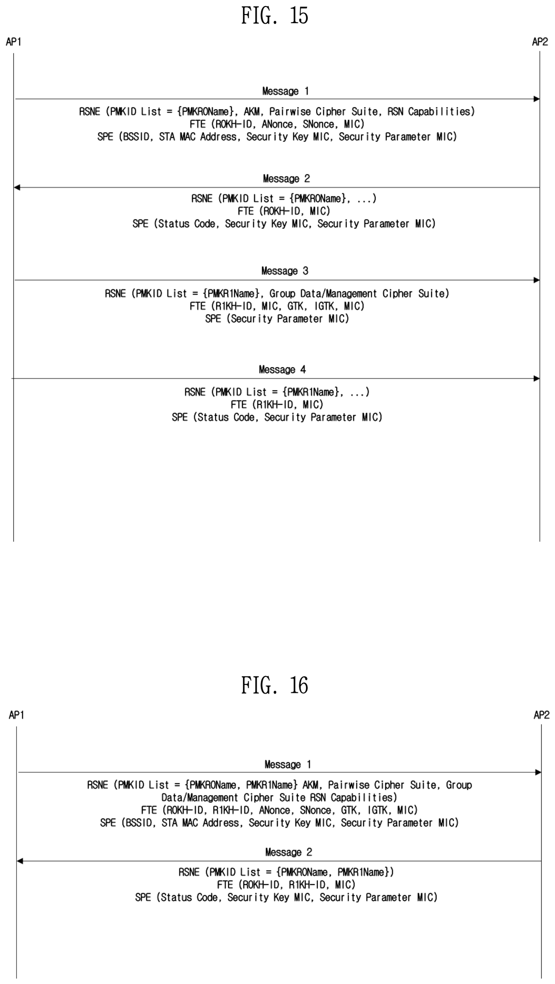

FIG. 15 is a drawing describing an example of a method for delivering security key-related information through 4-way handshaking according to the present disclosure.

Message 1 may be transmitted from R1KH of AP1 to R1KH of AP2 and may include the following security parameters.

A RSNE included in message 1 may include information required to decrypt encrypted data transmitted and received with an associated STA. For example, a Group Data Cipher Suite field may be set as a NULL value (corresponding information is provided to AP2 through message 3). A Pairwise Cipher Suite Count field may be set as a value (e.g., 1) corresponding to the number of pairwise cipher suites included in a corresponding message. A Pairwise Cipher Suite List field may include a cipher suite negotiated with an associated STA. A AKM Suite Count field may be set as a value (e.g., 1) corresponding to the number of AKM suites included in a corresponding message. A AKM Suite List field may include an AKM suite negotiated with an associated STA. A RSN Capabilities field may be set as the same value as the RSN Capabilities value of an associated STA. A PMKID Count field may be set as a value (e.g., 1) corresponding to the number of PMKIDs included in a corresponding message. A PMKID List field may be set as PMKR0Name. A Group Management Cipher Suite field may be set as a NULL value.

In this way, a RSNE included in message 1 may include only one pairwise cipher suite and one AKM negotiated between an associated STA and AP1. In a 4-way handshaking procedure performed after a general association process between a STA and an AP, a RSNE delivered by a STA to an AP includes a list of cipher suites supported by a STA and a negotiation proceeds with a cipher suite supported by an AP among them, so multiple cipher suites may be included in a RSNE. In contrast, since the examples of the present disclosure are performed after one pairwise cipher suite and one AKM negotiated through 4-way handshaking and an initial association between AP1 and a STA are determined, message 1 delivered by AP1 to AP2 may include one pairwise cipher suite and one AKM negotiated with a STA. In addition, the values of RSN capabilities of message 1 may be set to be the same as RSN capability values received by AP1 from a STA.

A FTE included in message 1 may include information required to generate the same PTK as the PTK of an associated STA. For example, a MIC control field may include information such as whether to use a RSNXE, a MIC length, the element count, etc. A MIC field may be set as a MIC value having the size of the MIC length of a MIC control field (e.g., one of 16, 24 and 32). An ANonce field may be set as the same value as a value generated by AP1 in a 4-way handshaking procedure according to an initial association between AP1 and a STA. A SNonce field may be set as the same value as a value generated by a STA in a 4-way handshaking procedure according to an initial association between AP1 and a STA. By delivering the same ANonce and SNonce values in this way, AP2 may also generate the same security key (a PTK/a TK) as Ap1/a STA. An additional parameter may be included in a FTE, and the sub-element identification information of a corresponding additional parameter may be set as 3 (which corresponds to the identifier (R0KH-ID) of a PMK-RO key holder) and data may include a value corresponding to R0KH-ID.

A SPE included in message 1 may include security key-related information. For example, a BSSID field may be set as a BSSID (or MAC address of an AP) value notified by AP1 to a STA in a 4-way handshaking procedure according to an initial association between AP1 and a STA. A STA MAC address field may be set as the MAC address value of an associated STA. A security key MIC field may be set as a value (e.g., a KCK, or another value derived from a PTK) that may be compared with a PTK held by AP1 (i.e., may verify whether they are the same) after AP2 generates a PTK. A security parameter MIC field may be set as a MIC value based on a combination of security parameters (i.e., a value that may confirm integrity after AP2 receives message 1). For example, in order to verify the validity of security parameters transmitted by AP1, a security parameter MIC field may include a checksum, a MIC value and the concatenated value of security parameters.

Message 2 may be transmitted from R1KH of AP2 to R1KH of AP1 and may include the following security parameters.

The PMKID count field of a RSNE of message 2 may be set as a value (e.g., 1) corresponding to the number of PMKIDs included in a corresponding message. A PMKID List field may be set as PMKR0Name.

The MIC control field of a FTE of message 2 may include information such as whether to use a RSNXE, a MIC length, the element count, etc. A MIC field may be set as a MIC value having the size of the MIC length of a MIC control field (e.g., one of 16, 24 and 32). An additional parameter may be included in a FTE, and the sub-element ID of a corresponding additional parameter may be set as 3 (which corresponds to the identifier (R0KH-ID) of a PMK-R0 key holder), and data may include a value corresponding to R0KH-ID.

The status code field of a SPE of message 2 may be set as a value representing whether AP2 may use a pairwise cipher suite and an AKM included in message 1 (e.g., 1 for success, 0 for reject). A security key MIC field may include, for example, a KCK or another value derived from a security key (e.g., a PTK) generated by AP2. A security parameter MIC field includes a MIC value generated by AP2 based on values included in message 1, which may be used for MIC inspection in AP1. In other words, a security parameter MIC field corresponds to a value meaning that AP2 successfully receives security parameters, and AP2 may include a value configured/calculated in the same manner in which AP1 configures/calculates a security parameter MIC value in message 1 in a corresponding field. AP2 may verify the integrity of security parameter values included in message 1 when a parameter MIC value derived based on security parameter values included in message 1 is the same as a security parameter MIC value included in message 1. AP1 may verify that AP2 correctly received message 1 when a security parameter MIC value received in message 2 (i.e., a value calculated by AP2) is the same as a security parameter MIC value transmitted in message 1 (i.e., a value calculated by AP1). In this way, AP1 and AP2 may mutually verify a security key MIC and a security parameter MIC calculated by AP1 and a security key MIC and a security parameter MIC calculated by AP2 by exchanging them.

Additionally or alternatively, AP2 may notify AP1 of a result of comparing a security key MIC and a security parameter MIC calculated by AP1 with a security key MIC and a security parameter MIC calculated by AP2 through a status code. For example, a security key status code included in the SPE of message 2 may be set as a value representing whether a security key MIC value included in message 1 and a MIC value calculated for a security key generated by AP2 (based on security key-related information included in message 1) are the same (e.g., 1) or not (e.g., 0) by comparing them. For example, a security parameter status code included in the SPE of message 2 may be set as a value representing whether a security parameter MIC value included in message 1 and a MIC value calculated by AP2 for a security parameter included in message 1 are the same (e.g., 1) or not (e.g., 0) by comparing them.

Message 3 may be transmitted from R1KH of AP1 to R1KH of AP2 and may include the following security parameters.

The Group Data Cipher Suite of the RSNE of message 3 may include a group data cipher suite negotiated with an associated STA. A PMKID Count field may be set as a value (e.g., 1) corresponding to the number of PMKIDs included in a corresponding message. A PMKID List field may be set as PMKR1Name. A Group Management Cipher Suite field may include a group management cipher suite negotiated with an associated STA.

In this way, a RSNE included in message 3 may include only one group data cipher suite and one group management cipher suite negotiated between an associated STA and AP1. In a 4-way handshaking procedure performed after a general association process between a STA and an AP, a RSNE delivered by a STA to an AP includes a list of cipher suites supported by a STA and a negotiation proceeds with a cipher suite supported by an AP among them, so multiple cipher suites may be included in a RSNE. In contrast, since the examples of the present disclosure are performed after one group data cipher suite and one group management cipher suite negotiated through 4-way handshaking and an initial association between AP1 and a STA are determined, message 3 delivered by AP1 to AP2 may include one group data cipher suite and one group management cipher suite negotiated with a STA.

The MIC control field of a FTE of message 3 may include information such as whether to use a RSNXE, a MIC length, the element count, etc. A MIC field may be set as a MIC value having the size of the MIC length of a MIC control field (e.g., one of 16, 24 and 32). An ANonce field and a SNonce field may be set as 0, respectively. An additional parameter may be included in a FTE, and the sub-element ID of a corresponding additional parameter may be set as 1 (which corresponds to the identifier (R1KH-ID) of a PMK-R1 key holder), and data may include a value corresponding to R1KH-ID. As another additional parameter, a sub-element ID may be set as 2 (which corresponds to a GTK) and data may include a value corresponding to a wrapped group key (e.g., a group key may be encrypted by a KEK). As another additional parameter, a sub-element ID may be set as 4 (which corresponds to an integrity GTK (IGTK)) and data may include a value corresponding to a wrapped IGTK (e.g., an IGTK may be encrypted by a KEK).

The security parameter MIC field of the SPE of message 3 may be set as a value (e.g., a checksum, a MIC value, the concatenated value of security parameters) for verifying the validity of security parameters transmitted by AP1.

Message 4 may be transmitted from R1KH of AP2 to R1KH of AP1 and may include the following security parameters.

The PMKID count field of a RSNE of message 4 may be set as a value (e.g., 1) corresponding to the number of PMKIDs included in a corresponding message. A PMKID List field may be set as PMKR1Name.

The MIC control field of a FTE of message 4 may include information such as whether to use a RSNXE, a MIC length, the element count, etc. A MIC field may be set as a MIC value having the size of the MIC length of a MIC control field (e.g., one of 16, 24 and 32). An ANonce field and a SNonce field may be set as 0, respectively. An additional parameter may be included in a FTE, and the sub-element ID of a corresponding additional parameter may be set as 1 (which corresponds to the identifier (R1KH-ID) of a PMK-R1 key holder), and data may include a value corresponding to R1KH-ID.

The group data cipher status code of the status code field of the SPE of message 4 may be set as a value representing whether AP2 may use a group data cipher suite included in message 3 (e.g., 1 for success, 0 for reject). The group management cipher suite status code of a status code field may be set as a value representing whether AP2 may use a group management cipher suite included in message 3 (e.g., 1 for success, 0 for reject). A security parameter MIC field includes a MIC value generated by AP2 based on values included in message 3, which may be used for MIC inspection in AP1. In other words, a security parameter MIC field corresponds to a value meaning that AP2 successfully receives security parameters, and AP2 may include a value configured/calculated in the same manner in which AP1 configures/calculates a security parameter MIC value in message 1 in a corresponding field. AP2 may verify the integrity of security parameter values included in message 3 when a parameter MIC value derived based on security parameter values included in message 3 is the same as a security parameter MIC value included in message 3. AP1 may verify that AP2 correctly received message 3 when a security parameter MIC value received in message 4 (i.e., a value calculated by AP2) is the same as a security parameter MIC value transmitted in message 3 (i.e., a value calculated by AP1). In this way, AP1 and AP2 may mutually verify a security key MIC and a security parameter MIC calculated by AP1 and a security key MIC and a security parameter MIC calculated by AP2 by exchanging them.

Additionally or alternatively, AP2 may notify AP1 of a result of comparing a security parameter MIC calculated by AP1 with a security parameter MIC calculated by AP2 through a status code. For example, a security parameter status code included in the SPE of message 4 may be set as a value representing whether a security parameter MIC value included in message 3 and a MIC value calculated by AP2 for a security parameter included in message 3 are the same (e.g., 1) or not (e.g., 0) by comparing them.

Among the security parameter MIC values included in each message within a 4-way handshaking procedure as in this embodiment, a security parameter MIC value included in message 1 or message 3 is a value for verifying security parameters (or security key-related information) transmitted by AP1, which may correspond to a value configured/calculated based on security parameters transmitted by AP1. AP2 may configure/calculate a security parameter MIC value in the same manner as AP1 based on security parameter values received in message 1 or message 3, and may verify the validity of received security parameters by comparing it with a security parameter MIC value included in message 1 or message 3. A security parameter MIC value included by AP2 in message 2 or message 4 corresponds to a security parameter MIC value configured/calculated by AP2 as above, and may represent that AP successfully received security parameters transmitted by AP1 by proving the same security parameter MIC value to AP1. If a security parameter MIC value included in message 2 or message 4 is not the same as a security parameter MIC value included in message 1 or message 3, AP2 may additionally request AP1 to retransmit security parameters included in message 1 or message 3.

Additionally or alternatively, a security parameter MIC configured/calculated by AP1 may not be included in message 1 or message 3. In this case, AP2 may include a MIC value configured/calculated based on security parameters received by it in message 2 or message 4 and request AP1 to verify it. Accordingly, the size of message 1 or message 3 may be reduced, but AP2 may not verify security parameters received by AP2. Based on a security parameter MIC value received by AP2 from AP2 after message 4, an additional message (e.g., including a retransmitted security parameter) may be transmitted to AP2, and for this, AP2 may transmit an additional message (e.g., including a MIC for a retransmitted security parameter) to AP1.

Additionally or alternatively, a security parameter MIC configured/calculated by AP2 may not be included in message 2 or message 4. In this case, AP2 may verify security parameters based on a security parameter MIC value provided by AP1 through message 1 or message 3 and may not notify a result thereof to AP1. Accordingly, the size of message 2 or message 4 may be reduced.

In examples described above, a security key MIC value included in message 1 is for verifying the value of a security key (a PTK) generated based on security parameters (i.e., security key-related information) transmitted by AP1 to AP2. After AP2 generates a PTK by using security parameters included in message 1, the MIC of a generated PTK may be configured/calculated and a result thereof may be verified by comparing it with a security key MIC value included in message 1. From a security key MIC value included in message 2 (i.e., a MIC value configured/calculated by AP2 for a security key generated by AP2), AP1 may verify whether AP2 generated the same security key as itself. If a security key MIC value included in message 2 is different from a security key MIC value included in message 1, AP1 may retransmit security parameters included in message 1 to AP2, and AP2 may re-notify AP1 of the MIC value of a security key regenerated based on this.

Additionally or alternatively, message 1 may not include a security key MIC. In this case, AP2 may generate a security key based on security parameters received by it and configure/calculate a MIC value for a generated security key to request AP1 to verify the identity of a corresponding security key (a PTK) through message 2. Accordingly, the size of message 1 may be reduced, but AP2 may not verify whether the same security key as AP1 is generated from security parameters received by AP2.

Additionally or alternatively, message 2 may not include a security key MIC value. In this case, AP2 may verify a security key generated by AP2 based on received security parameters based on a security key MIC value provided by AP1 through message 1 and may not notify AP1 of a result thereof. Accordingly, the size of message 2 may be reduced.

### Embodiment 3-2

This embodiment relates to a method for delivering security key-related information for generating the same security key between AP1 and AP2 through 2-way handshaking between AP1 and AP2.

FIG. 16 is a drawing describing an example of a method for delivering security key-related information through 2-way handshaking according to the present disclosure.

Message 1 may be transmitted from R1KH of AP1 to R1KH of AP2 and may include the following security parameters.

Compared to message 1 in FIG. 15, the RSNE of message 1 in FIG. 16 has a difference in the following field. The Group Data Cipher Suite field of the RSNE of message 1 in FIG. 16 may include a group data cipher suite negotiated with an associated STA. A PMKID Count field may be set as a value (e.g., 2) corresponding to the number of PMKIDs included in a corresponding message. A PMKID list field may be set as PMKR0Name and PMKR1Name. A Group Management Cipher Suite field may include a group management cipher suite negotiated with an associated STA. In addition, in the RSNE of message 1 in FIG. 16, pairwise cipher suite count, pairwise cipher suite list, AKM suite count, AKM suite list and RSN capability fields may be set to be the same as the corresponding fields of the RSNE of message 1 in FIG. 15.

In this way, a RSNE included in message 1 may include only one pairwise cipher suite, one AKM, one group data cipher suite and one group management cipher suite negotiated between an associated STA and AP1. In a 4-way handshaking procedure performed after a general association process between a STA and an AP, a RSNE delivered by a STA to an AP includes a list of cipher suites supported by a STA and a negotiation proceeds with a cipher suite supported by an AP among them, so multiple cipher suites may be included in a RSNE. In contrast, since the examples of the present disclosure are performed after one pairwise cipher suite, one AKM, one group data cipher suite and one group management cipher suite negotiated through 4-way handshaking and an initial association between AP1 and a STA are determined, message 1 delivered by AP1 to AP2 may include one pairwise cipher suite, one AKM, one group data cipher suite and one group management cipher suite negotiated with a STA. In addition, the values of RSN capabilities of message 1 may be set to be the same as RSN capability values received by AP1 from a STA.

The MIC control, MIC, ANonce and SNonce fields of the FTE of message 1 in FIG. 16 may be set to be the same as the corresponding fields of the FTE of message 1 in FIG. 15. Unlike the FTE of message 1 in FIG. 15, the FTE of message 1 in FIG. 16 may further include at least zero parameter among the first to fourth additional parameters below. For example, in the first additional parameter, a sub-element ID may be set as 1 (which corresponds to the identifier (R1KH-ID) of a PMK-R1 key holder), and data may include a value corresponding to R1KH-ID. In the second additional parameter, a sub-element ID may be set as 2 (which corresponds to a GTK), and data may include a value corresponding to a wrapped group key (e.g., a group key may be encrypted by a KEK). In the third additional parameter, a sub-element ID may be set as 3 (which corresponds to the identifier (R0KH-ID) of a PMK-RO key holder), and data may include a value corresponding to R0KH-ID. In the fourth additional parameter, a sub-element ID may be set as 4 (which corresponds to an integrity GTK (IGTK)), and data may include a value corresponding to a wrapped IGTK (e.g., an IGTK may be encrypted by a KEK).

The BSSID, STA MAC address, security key MIC and security parameter MIC fields of the SPE of message 1 in FIG. 16 may be set to be the same as the corresponding fields of the SPE of message 1 in FIG. 15.

The PMKID count field of the RSNE of message 2 in FIG. 16 may be set as a value (e.g., 2) corresponding to the number of PMKIDs included in a corresponding message. A PMKID list field may be set as PMKR0Name and PMKR1Name.

The MIC control, MIC, ANonce and SNonce fields of the FTE of message 2 in FIG. 16 may be set to be the same as the corresponding fields of the FTE of message 2 in FIG. 15. Unlike the FTE of message 1 in FIG. 15, an additional parameter may be included in the FTE of message 1 in FIG. 16, and the sub-element ID of a corresponding additional parameter may be set as 1 (which corresponds to the identifier (R1KH-ID) of a PMK-R1 key holder), and data may include a value corresponding to R1KH-ID. The sub-element ID of another additional parameter may be set as 3 (which corresponds to the identifier (R0KH-ID) of a PMK-RO key holder), and data may include a value corresponding to R0KH-ID.

The status code field of the SPE of message 2 in FIG. 16 may be set as a value representing whether AP2 may use a pairwise cipher suite, an AKM, a group data cipher suite and a group management cipher suite included in message 1 (e.g., 1 for success, 0 for reject). The security key MIC and security parameter MIC fields of the SPE of message 2 in FIG. 16 may be set to be the same as the corresponding fields of the SPE of message 2 in FIG. 15.

Additionally or alternatively, AP2 may notify AP1 of a result of comparing a security key MIC and a security parameter MIC calculated by AP1 with a security key MIC and a security parameter MIC calculated by AP2 through a status code. For example, a security key status code included in the SPE of message 2 may be set as a value representing whether a security key MIC value included in message 1 and a MIC value calculated for a security key generated by AP2 (based on security key-related information included in message 1) are the same (e.g., 1) or not (e.g., 0) by comparing them. For example, a security parameter status code included in the SPE of message 2 may be set as a value representing whether a security parameter MIC value included in message 1 and a MIC value calculated by AP2 for a security parameter included in message 1 are the same (e.g., 1) or not (e.g., 0) by comparing them.

Among the security parameter MIC values included in each message within a 2-way handshaking procedure as in this embodiment, a security parameter MIC value included in message 1 is a value for verifying security parameters (or security key-related information) transmitted by AP1, which may correspond to a value configured/calculated based on security parameters transmitted by AP1. AP2 may configure/calculate a security parameter MIC value in the same manner as AP1 based on security parameter values received in message 1, and may verify the validity of received security parameters by comparing it with a security parameter MIC value included in message 1. A security parameter MIC value included by AP2 in message 2 corresponds to a security parameter MIC value configured/calculated by AP2 as above, and may represent that AP successfully received security parameters transmitted by AP1 by proving the same security parameter MIC value to AP1. If a security parameter MIC value included in message 2 is not the same as a security parameter MIC value included in message 1, AP2 may additionally request AP1 to retransmit security parameters included in message 1 or message 3.

Additionally or alternatively, a security parameter MIC configured/calculated by AP1 may not be included in message 1. In this case, AP2 may include a MIC value configured/calculated based on security parameters received by it in message 2 and request AP1 to verify it. Accordingly, the size of message 1 may be reduced, but AP2 may not verify security parameters received by AP2. Based on a security parameter MIC value received by AP2 from AP2 after message 2, an additional message (e.g., including a retransmitted security parameter) may be transmitted to AP2, and for this, AP2 may transmit an additional message (e.g., including a MIC for a retransmitted security parameter) to AP1.

Additionally or alternatively, a security parameter MIC configured/calculated by AP2 may not be included in message 2. In this case, AP2 may verify security parameters based on a security parameter MIC value provided by AP1 through message 1 and may not notify a result thereof to AP1. Accordingly, the size of message 2 may be reduced.

In examples described above, a security key MIC value included in message 1 is for verifying the value of a security key (a PTK) generated based on security parameters (i.e., security key-related information) transmitted by AP1 to AP2. After AP2 generates a PTK by using security parameters included in message 1, the MIC of a generated PTK may be configured/calculated and a result thereof may be verified by comparing it with a security key MIC value included in message 1. From a security key MIC value included in message 2 (i.e., a MIC value configured/calculated by AP2 for a security key generated by AP2), AP1 may verify whether AP2 generated the same security key as itself. If a security key MIC value included in message 2 is different from a security key MIC value included in message 1, AP1 may retransmit security parameters included in message 1 to AP2, and AP2 may re-notify AP1 of the MIC value of a security key regenerated based on this.

Additionally or alternatively, message 1 may not include a security key MIC. In this case, AP2 may generate a security key based on security parameters received by it and configure/calculate a MIC value for a generated security key to request AP1 to verify the identity of a corresponding security key (a PTK) through message 2. Accordingly, the size of message 1 may be reduced, but AP2 may not verify whether the same security key as AP1 is generated from security parameters received by AP2.

Additionally or alternatively, message 2 may not include a security key MIC value. In this case, AP2 may verify a security key generated by AP2 based on received security parameters based on a security key MIC value provided by AP1 through message 1 and may not notify AP1 of a result thereof. Accordingly, the size of message 2 may be reduced.

### Embodiment 3-3

This embodiment relates to a method for delivering security key-related information for generating the same security key between AP1 and AP2 through 1-way notification from AP1 to AP2.

This embodiment may include a method in which AP1 delivers security key-related information to AP2 in a unicast manner and a method in which AP1 announces security key-related information to other multiple APs within a MAP (e.g., AP2, AP3, AP4, ...) (e.g., delivered through a group-addressed frame or in a groupcast manner).

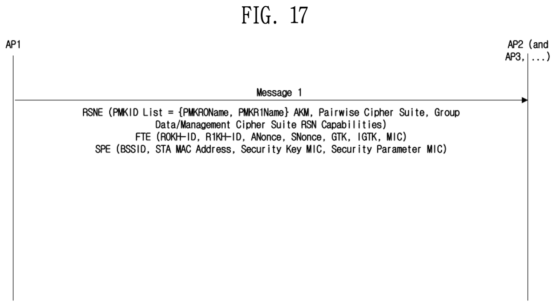

FIG. 17 is a drawing describing an example of a method for delivering security key-related information through 1-way notification according to the present disclosure.

In the example of FIG. 17, a RSNE, a FTE and a SPE included in message 1 may be set to be the same as a RSNE, a FTE and a SPE included in message 1 in the example of FIG. 16. Accordingly, an overlapping description is omitted.

In the example of FIG. 17, an AP (e.g., AP2, AP3, ...) that receives a security parameter (or security key-related information) from AP1 does not send a response message verifying it. In other words, based on a security key MIC and/or a security parameter MIC transmitted by AP1 together with a security parameter through message 1, a receiving AP (e.g., AP2, AP3, ...) may configure/calculate a security key MIC and/or a security parameter MIC. A security key MIC and/or a security parameter MIC configured/calculated by a receiving AP (e.g., AP2, AP3, ...) may be compared with a security key MIC and/or a security parameter MIC included in message 1 received from AP1 to verify a security parameter and verify a security key generated based on a corresponding security parameter.

### Embodiment 4

This embodiment relates to a PTK generation method defined in the present disclosure.

An AP belonging to a MAP and a STA associated with a corresponding AP may generate a PTK according to the following equation. PTK = KDF_Hash_Length(PMK-R1,"MAP-PTK",SNonce||ANonce||BSSID||STA-ADDR)

KDF_Hash_Length() means a key derivation function that generates the key of a specific length by using a specific hash algorithm.

PMK-R1 corresponds to the second-level key in a FT key hierarchy, and may be mutually derived by S0KH and R0KH.

A label, which is a string identifying the purpose of a key generated by a PRF function, may be designated as "MAP-PTK", which corresponds to a PTK (i.e., a PTK generated based on security key-related information delivered to an AP in a MAP) in examples described above.

SNonce may correspond to a random number generated by a STA (i.e., a supplicant).

ANonce may correspond to a random number generated by a master AP or a slave AP (i.e., an authenticator) that is initially associated with a STA.

A BSSID may correspond to the BSSID of a master AP, the MAC address of a master AP or a MAC address value commonly used in a MAP.

STA-ADDR corresponds to the MAC address of a STA.

While a BSS transition method in the existing WLAN system is supported but new authentication and association procedures with a target AP are required, according to the present disclosure, a STA may mutually transmit and receive data with other APs generating the same security key as a security key generated by a corresponding STA and an AP that establishes an initial association with a corresponding STA even without an authentication procedure/an association procedure with other APs by delivering security key-related information generated by one AP for a STA to the remaining APs within the same AP set (e.g., MAP).

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless local area network (WLAN) system, the method comprising:
generating a security key for a second STA based on an association with the second STA; and
transmitting, to a third STA, a first message including information related to the security key for the second STA,
wherein the first message includes a security parameter element (SPE) including at least one of a basic service set identifier (BSSID) of the first STA or an address of the second STA.

2. The method of Claim 1, wherein:
the first message includes one pairwise cipher suite and one authentication key method (AKM) negotiated between the first STA and the second STA.

3. The method of Claim 1, wherein:
a value of at least one robust security network (RSN) capability included in the first message is equal to a value of at least one RSN capability received from the second STA.

4. The method of Claim 1, wherein:
the SPE of the first message includes at least one of a security parameter message integrity code (MIC) or a security key MIC calculated by the first STA.

5. The method of Claim 1, wherein:
after transmitting the first message, a second message is received from the third STA, and
the second message includes a SPE including a status code indicating whether to use each of one pairwise cipher suite and one AKM included in the first message.

6. The method of Claim 5, wherein:
the SPE of the second message includes at least one of a security parameter MIC or a security key MIC calculated by the third STA.

7. The method of Claim 5, wherein:
after receiving the second message, a third message is transmitted to the third STA, and
the third message includes one group data cipher suite, and one group management cipher suite negotiated between the first STA and the second STA.

8. The method of Claim 7, wherein: a SPE of the third message includes a security parameter MIC calculated by the first STA.

9. The method of Claim 7, wherein:
after transmitting the third message, a fourth message is received from the third STA, and
the fourth message includes a SPE including a status code indicating whether to use each of one group data cipher suite and one group management cipher suite included in the third message.

10. The method of Claim 9, wherein:
the SPE of the fourth message includes a security parameter MIC calculated by the third STA.

11. The method of Claim 1, wherein:
the first message includes one pairwise cipher suite, one AKM, one group data cipher suite, and one group management cipher suite negotiated between the first STA and the second STA.

12. The method of Claim 11, wherein:
a value of at least one RSN capability included in the first message is equal to a value of at least one RSN capability received from the second STA.

13. The method of Claim 11, wherein:
the SPE of the first message includes at least one of a security parameter MIC or a security key MIC calculated by the first STA.

14. The method of Claim 11, wherein:
after transmitting the first message, a second message is received from the third STA, and
the second message includes a SPE including a status code indicating whether to use each of one pairwise cipher suite, one AKM, one group data cipher suite, and one group management cipher suite included in the first message.

15. The method of Claim 14, wherein:
the SPE of the second message includes at least one of a security parameter MIC or a security key MIC calculated by the third STA.

16. The method of Claim 11, wherein:
the first message is groupcast to a plurality of STAs including the third STA.

17. The method of Claim 4, wherein:
after transmitting the first message, a second message is received from the third STA, and
the second message includes a SPE including at least one of a security parameter status code representing a verification result based on the security parameter MIC, or a security key status code representing a verification result based on the security key MIC.

18. The method of Claim 13, wherein:
after transmitting the first message, a second message is received from the third STA, and
the second message includes a SPE including at least one of a security parameter status code representing a verification result based on the security parameter MIC, or a security key status code representing a verification result based on the security key MIC.

19. The method of Claim 8, wherein:
after transmitting the third message, a fourth message is received from the third STA, and
the fourth message includes a SPE including a security parameter status code representing a verification result based on the security parameter MIC.

20. The method of Claim 1, wherein:
at least one of a group temporal key (GTK) provided by the first STA to the second STA or information related to the GTK is transmitted to the third STA from the first STA.

21. The method of Claim 1, wherein:
the first STA is a first access point (AP) that establishes an initiation association with the second STA within a multi-access point (MAP),
the second STA is a non-AP STA, and
the third STA is a second AP within the MAP.

22. The method of Claim 21, wherein:
the first AP is a sharing AP and the second AP is a shared AP,
the first AP is the shared AP and the second AP is the sharing AP, or
the first AP is the shared AP and the second AP is another shared AP.

23. A first station (STA) device in a wireless local area network (WLAN) system, the device comprising:
at least one transceiver; and
at least one processor connected to the at least one transceiver,
wherein the at least one processor is configured to:
generate a security key for a second STA based on an association with the second STA; and
transmit, through the at least one transceiver, to a third STA, a first message including information related to the security key for the second STA,
wherein the first message includes a security parameter element (SPE) including at least one of a basic service set identifier (BSSID) of the first STA or an address of the second STA.

24. A method performed by a third station (STA) in a wireless local area network (WLAN) system, the method comprising:
receiving, from a first STA, a first message including information related to a security key for a second STA generated based on an association between the first STA and the second STA; and
generating the security key for the second STA based on the information related to the security key for the second STA,
wherein the first message includes a security parameter element (SPE) including at least one of a basic service set identifier (BSSID) of the first STA or an address of the second STA.

25. A third station (STA) device in a wireless local area network (WLAN) system, the derive comprising:
at least one transceiver; and
at least one processor connected to the at least one transceiver,
wherein the at least one processor is configured to:
receive, through the at least one transceiver, from a first STA, a first message including information related to a security key for a second STA generated based on an association between the first STA and the second STA; and
generate the security key for the second STA based on the information related to the security key for the second STA,
wherein the first message includes a security parameter element (SPE) including at least one of a basic service set identifier (BSSID) of the first STA or an address of the second STA.

26. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to Claim 1.

27. At least one non-transitory computer-readable medium storing at least one instruction, wherein:
the at least one instruction controls a device to perform a method according to Claim 1 in a wireless local area network (WLAN) system by being executed by at least one processor.
